# DEMANDE DE BREVET EUROPEEN

(11) **EP 0 950 942 A1**
(43) Date de publication de la demande: **20.10.1999**
(21) Numéro de dépôt: 99400911.6
(22) Date de dépôt: 14.04.1999
(51) Int. Cl.: G06F 1/00, G06F 9/445

(54) **Procédé de télédistribution de logiciels pour ordinateur personnel et dispositif de mise en aeuvre de ce procédé**

(30) Priorité: 15.04.1998 FR 9804694
(71) Demandeur: BULL S.A., 78430 Louveciennes (FR)
(72) Inventeur: Vlaemynck, Philippe, 78640 Saint Germain de la Grange (FR)

(57) **Abrégé**

La présente invention concerne un procédé de télédistribution de logiciels pour ordinateur personnel (SDSDPC) sur des stations cibles sécurisables, comportant au moins une station cible, des serveurs auxiliaires de dépôt (SDD) et de consigne (SDC) et une console d'administration (CDA) exécutant un programme d'administration appelé ISM, l'installation des logiciels sur les stations étant activée par un programme d'installation sécurisable appelé sdclient, caractérisé en ce que le programme d'installation sécurisable (sdclient) teste si la station cible est sécurisée et par quel type de module de sécurisation (MS) elle est sécurisée; si la station cible n'est pas sécurisée, le programme d'installation sécurisable (sdclient) enclenche l'implémentation d'un programme non sécurisé; si la station cible est sécurisée, le programme d'installation (sdclient) recherche une liste de droits temporaires (DT) et une liste de droits permanents (DP) établies sur le serveur de dépôt (SDD) pour installer un fichier temporaire de droits permettant l'installation de l'application et établir un fichier de droits permanents.

## Description

La présente invention concerne un procédé de télédistribution de logiciels pour ordinateur personnel sur des stations sécurisées et le dispositif de mise en oeuvre de ce procédé.

La télédistribution de logiciels est connue. Elle consiste à installer automatiquement des programmes applicatifs sur des stations cibles par l'intermédiaire d'un réseau. On appelle station cible, l'ordinateur sur lequel un logiciel ou plus généralement un produit va être livré.

De manière générale, une station de travail est sécurisée lorsqu'elle comporte un module de sécurisation. Les modules de sécurisation sont connus. Ils permettent de sécuriser les fichiers et les répertoires d'une station cible. Le principe général de ces modules de sécurisation consiste à doter chaque ressource (fichier répertoire) d'attributs de sécurité variant en fonction des utilisateurs du poste, et à contrôler en temps réel et à chaque accès, l'habilitation de l'utilisateur à effectuer l'action demandée sur la ressource. Ces attributs de sécurité sont définis comme une liste de permissions appelée ACL (Access Control List) accordées à des catégories d'utilisateurs

Dans l'état actuel de la technique, la télédistribution de produits sur des stations sécurisées ne peut être réalisée qu'à l'aide de paramétrages manuels de la station. A chaque paramétrage, un utilisateur établit un droit d'installation pour chaque fichier lancé lors de l'installation d'un produit. La station doit être paramètrée manuellement une première fois avant l'installation du produit puis une seconde fois à l'issue de l'installation du produit. De plus, les produits à installer sont variables et la sécurisation de la station est totalement dépendante du produit à installer car chaque produit a des fichiers différents à lancer lors de son installation. Ainsi, les paramétrages manuels de la station doivent être exécutés à chaque installation d'un nouveau produit. Ce travail de paramétrage long et fastidieux est totalement contraire à l'idée d'installation automatique permise par un programme de télédistribution tel que SDPC. En raison de toutes ces difficultés, les utilisateurs réalisent l'installation des logiciels sur des stations non sécurisées.

La présente invention a pour but de remédier aux inconvénients de l'art antérieur et propose un procédé simple et automatique de télédistribution de logiciels sur des stations sécurisées.

Ce but est atteint par le fait que le procédé de télédistribution de logiciels pour ordinateur personnel sur des stations cibles sécurisables, comportant au moins une station cible, des serveurs auxiliaires de dépôt et de consigne et une console d'administration exécutant un programme d'administration appelé ISM, l'installation des logiciels sur les stations étant activée par un programme d'installation sécurisable appelé sdclient est caractérisé en ce que le programme d'installation sécurisable teste si la station cible est sécurisée et par quel type de module de sécurisation elle est sécurisée; si la station cible n'est pas sécurisée, le programme d'installation sécurisable enclenche l'implémentation d'un programme non sécurisé; si la station cible est sécurisée, le programme d'installation recherche une liste de droits temporaires et une liste de droits permanents établies sur le serveur de dépôt pour installer un fichier temporaire de droits permettant l'installation de l'application et établir un fichier de droits permanents.

Selon une autre particularité, le procédé comporte l'exécution des étapes suivantes afin d'installer un fichier temporaire de droits permettant l'installation de l'application, puis d'établir un fichier de droits permanents :
- une étape pendant laquelle le programme d'installation sécurisable lit les consignes qui le concernent sur ledit serveur de consignes,
- une étape pendant laquelle le programme d'installation sécurisable accède à une liste de droits située sur un serveur de dépôt dont l'adresse est spécifiée dans les consignes dudit serveur de consignes,
- une étape (F) pendant laquelle le programme d'installation sécurisable (sdclient) établit lesdits droits temporaires sur la station cible sécurisée,
- une étape (G) pendant laquelle le programme d'installation active au moins un programme d'installation du produit à installer,
- une étape (H) pendant laquelle le programme d'installation sécurisable supprime les fichiers des droits temporaires.
- une étape (I) pendant laquelle le programme d'installation sécurisable établit les droits permanents sur la station cible sécurisée de manière à ce que le module de sécurisation de ladite station cible sécurisée puissent les gérer.

Selon une autre particularité, pour établir les droits temporaires sur la station cible sécurisée, le programme d'installation sécurisable interprète directement les droits temporaires sur les serveurs de dépôt.

Selon une autre particularité, pour établir les droits temporaires sur la station cible sécurisée, le programme d'installation sécurisable transfère lesdits fichiers de droits temporaires dudit serveur de dépôt à ladite station cible sécurisée et les installe sur la station cible sécurisée.

Selon une autre particularité, le programme d'installation sécurisable traduit les fichiers de droits temporaires installés sur le serveur de dépôt de manière à les rendre lisibles par le module de sécurisation utilisé sur la station cible sécurisée,

Selon une autre particularité, lesdits droits permanents sont établis sur la station cible sécurisée par l'exécution des étapes suivantes:
- une étape pendant laquelle ledit programme d'installation sécurisable recherche ledit fichier des droits permanents sur ledit serveur de dépôt et le transforme en fichiers de droits adaptés et lisibles par le module de sécurisation utilisé sur ladite station cible sécurisée,
- une étape pendant laquelle ledit programme d'installation sécurisable installe les fichiers des droits permanents sur ladite station cible sécurisée de manière à ce que le module de sécurisation de ladite station cible sécurisée puisse gérer lesdits fichiers de droits permanents,

Selon une autre particularité, l'étape d'installation des fichiers est suivie d'une étape de suppression des consignes dans ledit serveur de consignes.

Selon une autre particularité, l'étape de recherche du type de sécurisation est réalisée soit par la recherche d'un nom construit d'une façon déterminée par avance, soit par l'introduction d'une référence aux fichiers des droits dans le serveur de consigne.

Selon une autre particularité, ladite liste de droits est cryptée et non modifiable.

Selon une autre particularité, les consignes sont cryptées sur le serveur de consignes afin d'empêcher l'accès aux listes de droits (LD).

Un autre but de l'invention est de proposer un dispositif de télédistribution de logiciels pour ordinateur personnel sur des stations sécurisables, qui comporte au moins une station cible, des serveurs auxiliaires de dépôt et de consigne et une console d'administration exécutant un programme d'administration appelé ISM, l'installation des logiciels sur les stations étant activée par un programme d'installation sécurisable appelé sdclient, caractérisé en ce qu'une liste des droits temporaires des programmes d'installation et une liste des droits permanents des fichiers installés sont associées aux fichiers du logiciel à installer sur le serveur de dépôt.

Selon une autre particularité, ledit programme sécurisable exploite les droits temporaires afin d'installer définitivement et immuablement un produit sur une station cible sécurisée.

Selon une autre particularité, les droits temporaires permettant l'installation du produit (PAT) sont supprimés après l'installation dudit produit.

Selon une autre particularité, les droits temporaires agissent sur le programme d'installation et tout autre programme auxiliaire pouvant être lancé pendant la phase d'installation.

Selon une autre particularité, lesdits droits permanents établis par le programme d'installation sécurisable (sdclient) sont gérés par le module de sécurisation installé sur ladite station cible sécurisée.

Selon une autre particularité, le programme d'installation sécurisable reconnaît si la station cible est sécurisée ou ne l'est pas.

Selon une autre particularité, le programme d'installation sécurisable reconnaît le type de sécurisation implanté sur la station cible sécurisée et que le programme d'installation sécurisable enclenche l'implémentation d'un programme sécurisé adapté au type de sécurisation implanté sur la station cible sécurisée.

D'autres particularités et avantages de la présente invention apparaîtront plus clairement à la lecture de la description ci-après faite en référence aux dessins annexés dans lesquels :
- la figure 1 représente une vue schématique du dispositif sur lequel le procédé de l'invention est mis en oeuvre,
- la figure 2 représente une vue schématique des différentes étapes du procédé de télédistribution de logiciels pour ordinateur personnel et dispositif de mise en oeuvre de ce procédé,
- le tableau de la figure 3 définit les droits gérés par une ressource de type fichier dans le cadre d'une sécurisation de type "CP8-File",
- le tableau de la figure 4 définit les droits gérés par une ressource de type répertoire dans le cadre d'une sécurisation de type "CP8-File",
- le tableau de la figure 5 définit les règles de gestion des droits dans le cadre d'une sécurisation de type "CP8-File".

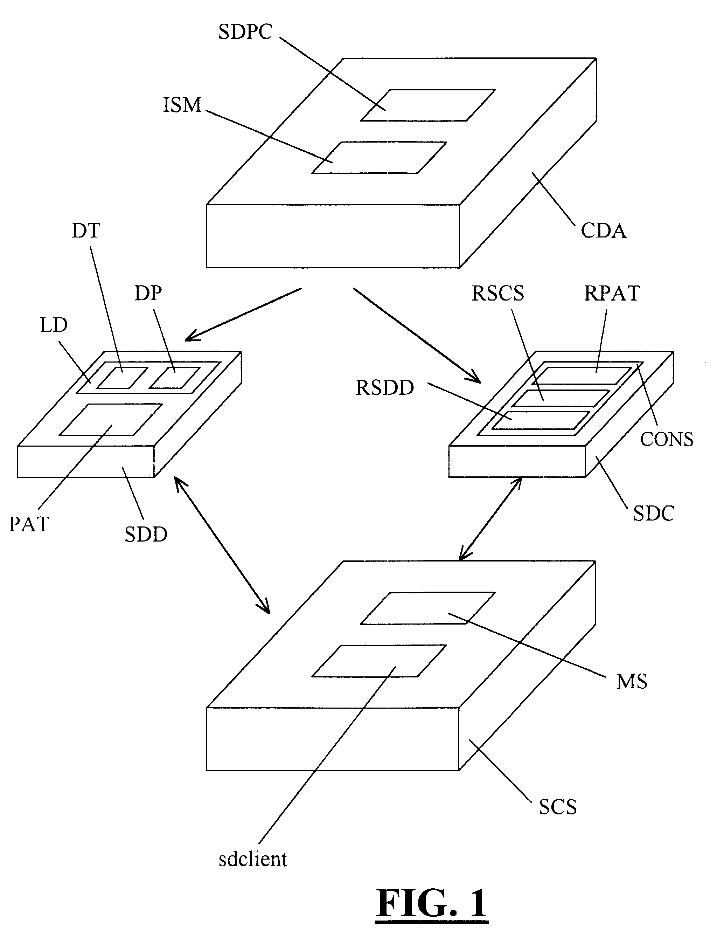

Le procédé de télédistribution de logiciels pour ordinateur personnel est mis en oeuvre par un programme d'application (SDPC) pour télédistribuer des programmes applicatifs (PAT) sur des stations cibles. Dans le cadre du procédé de télédistribution de logiciels selon l'invention (figure 1), au moins une station cible, des serveurs de dépôt (SDD), de consigne (SDC) et une console d'administration (CDA) interviennent. Les serveurs sont des serveurs auxiliaires de deux types. Les serveurs de dépôt (SDD) contiennent le ou les produits à installer (PAT) et un fichier contenant des listes de droits (LD). Les serveurs de consigne (SDC) contiennent les références (RPAT) du produit à installer, les références (RSCS) de la station où l'on va installer le produit et la référence (RSDD) à un serveur de dépôt (SDD), c'est-à-dire l'adresse du serveur de dépôt qui contient le produit. La console d'administration (CDA) exécute un programme d'administration appelé ISM, celui-ci gère la livraison de produits dans les serveurs de dépôt (SDD) et l'envoi quotidien des consignes dans les serveurs de consigne (SDC) par un programme (SDPC) de distribution de programme. La station cible comporte un agent exécutable appelé (sdclient) qui se déclenche d'une manière complètement asynchrone, à un certain moment, par exemple à heure fixe, sur commande de l'utilisateur, ou au moment où l'ordinateur démarre.

Lors de l'installation d'un logiciel ou plus généralement d'un produit sur une station, l'agent exécutable (sdclient) est amené à lancer des programmes. Ces programmes, disponibles sur le serveur de dépôt avec le produit à installer, sont différents pour chaque produit installé. Pour pouvoir être lancés sur une station sécurisée, ces programmes doivent avoir les droits nécessaires à l'installation du produit. Après l'installation du produit, ces droits doivent être supprimés pour qu'un utilisateur ne puisse pas redéclencher une nouvelle installation ou modifier les paramètres de la première installation. Ces droits sont donc variables et temporaires, on les appelle les droits temporaires (DT), et sont enregistrés dans un fichier liste de droits (LD) du serveur de dépôt (SDD).

Le produit étant installé, les exécutables de SPDC (l'agent sdclient) doivent avoir des droits suffisants à leur exécution pour le ou les utilisateurs considérés. Ces droits représentent une liste de permissions accordées à certains utilisateurs pour chaque ressource (fichier, répertoire). Ces droits sont fixes et permanents, on les appelle les droits permanents (DP). Au moins un fichier contenant les droits temporaires (DT) et les droits permanents (DP) est fabriqué lors de la constitution de l'ensemble (package) à installer. Ce fichier est ensuite transféré sur le serveur de dépôt en même temps que l'ensemble à installer.

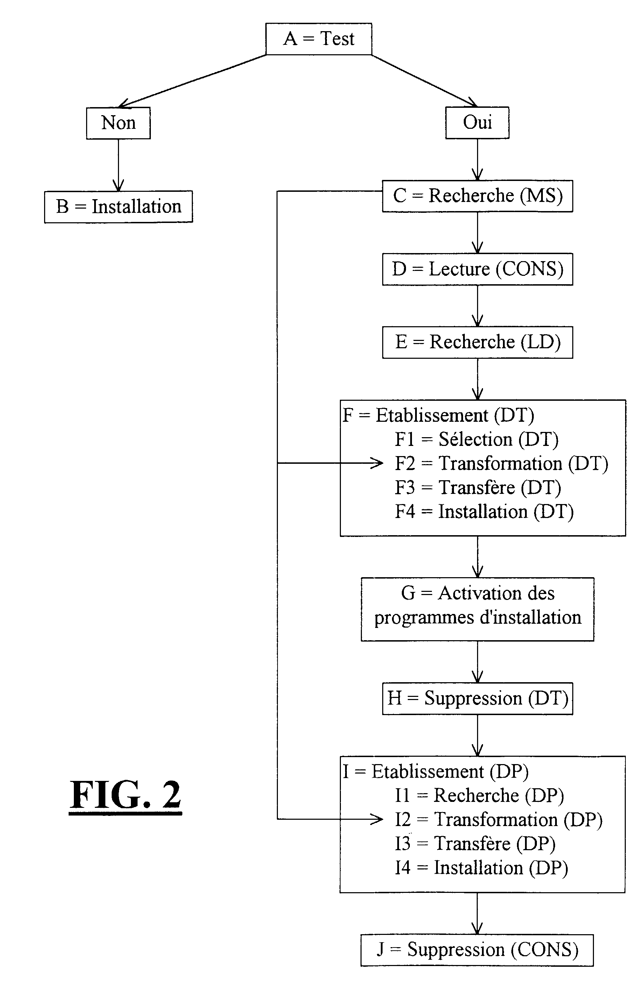

Le procédé de télédistribution de logiciels pour ordinateur personnel (SDPC) sur des stations sécurisables prend en charge la diversité des plates-formes, c'est-à-dire qu'il s'adapte aussi bien aux stations sécurisées qu'aux stations non sécurisées. Ainsi, le procédé comporte une étape (étape A, figure 2) pendant laquelle l'agent exécutable (sdclient) recherche si la station cible est sécurisée. Si la station n'est pas sécurisée, l'agent exécutable (sdclient) déclenche une installation classique (étape B, figure 2) destinée aux stations non sécurisées. Si la station est sécurisée, l'agent exécutable (sdclient) recherche le type de module de sécurisation (étape C, figure 2) implanté sur la station cible donnée. Puis, l'agent exécutable (sdclient) s'adresse au serveur de consigne (SDC) qui lui a été attribué et lit les consignes (CONS) qui le concernent (étape D, figure 2). Muni de ces consignes, l'agent exécutable (sdclient) accède au serveur de dépôt (SDD) spécifié dans les consignes du serveur de consigne (SDC) et recherche (étape E, figure 2) au moins une liste de droits (LD). Cette recherche peut être réalisée soit par convention, soit par référence. Dans le premier cas, c'est-à-dire par convention, les fichiers contenant la liste de droits ont systématiquement le même nom ou un nom systématiquement construit de la même manière. Dans le second cas, c'est-àdire par référence, la référence à cette liste de droits (LD), c'est-à-dire le nom de ce fichier ou la façon dont il se présente, peut être placé dans la consigne (CONS). Dans ce dernier cas, avantageusement, si les consignes sont encodées et donc non interprétables, un utilisateur qui aurait accès au serveur de consigne ne pourrait pas reconnaître où est la liste de droits (LD).

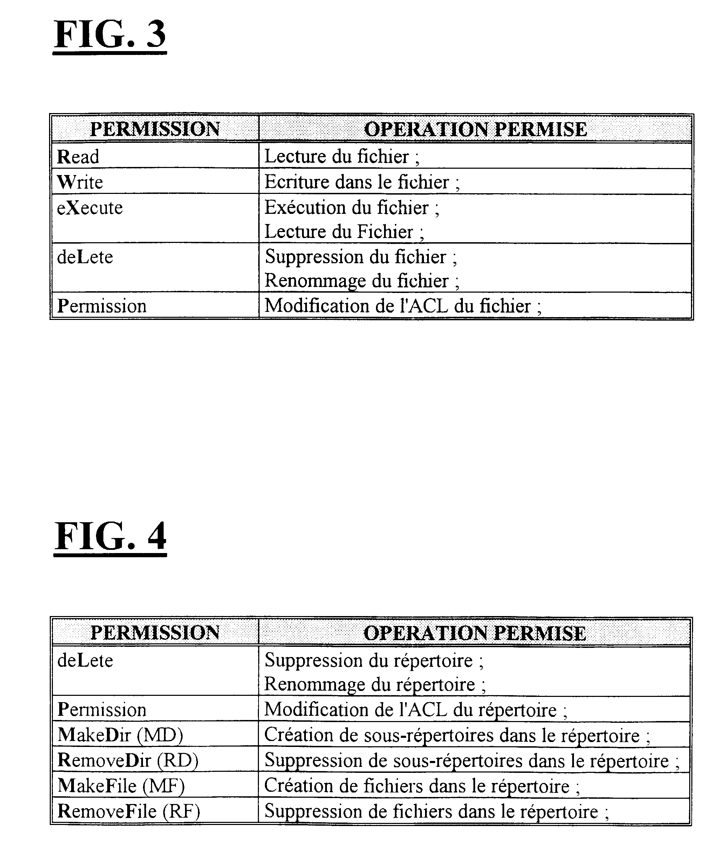

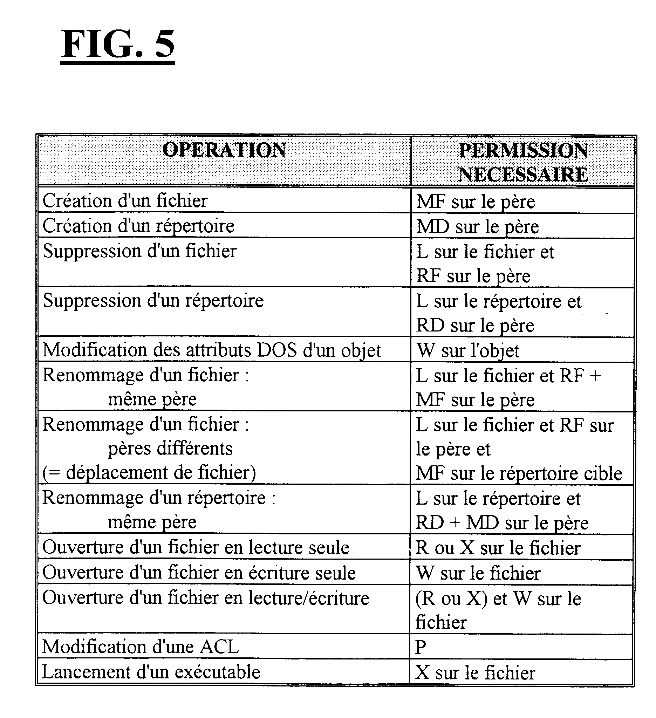

La liste de droits (LD) comporte différents droits ou permissions qui sont fonction du type de ressource. La figure 3 définit quatre permissions concernant une ressource de type fichier dans le cadre d'une sécurisation de type "CP8-File". Ainsi, la permission "Read" (R) permet à un utilisateur de lire un fichier, la permission "Write" (W) permet à un utilisateur d'écrire dans un fichier. La permission "eXecute" (X) permet non seulement l'exécution d'un fichier, mais aussi la lecture d'un fichier. La permission "deLete" (L) permet la suppression d'un fichier et son renommage. La permission "Permission" (P) permet à son possesseur de modifier la liste des permissions (ACL). La figure 4 définit les permissions concernant une ressource de type répertoire dans le cadre d'une sécurisation de type "CP8-File". Les permissions "MakeDir" (MD) et "RemoveDir" (RD) permettent respectivement de créer et de supprimer des sous-répertoires dans un répertoire. Les permissions "MakeFile" (MF) et "RemoveFile" (RF) permettent de créer et de supprimer des fichiers dans un répertoire. Ces droits ou permissions répondent à des règles de gestion très stricte. La figure 5 présente les règles de gestion des droits des fichiers et des répertoires dans le cadre d'une sécurisation de type "CP8-File". Pour avoir le droit de créer un fichier, l'utilisateur doit avoir la permission (MF) sur le répertoire dans lequel il veut créer un fichier. Pour créer un sous-répertoire, l'utilisateur doit avoir la permission (MD) sur le répertoire dans lequel il veut créer un sous-répertoire. Afin de supprimer un fichier, l'utilisateur doit posséder un droit (L) sur le fichier qu'il veut supprimer et un droit (RF) de suppression de fichier dans le répertoire dans lequel il veut supprimer un fichier. Afin de supprimer un répertoire, l'utilisateur doit posséder un droit (L) sur le répertoire qu'il veut supprimer et un droit (RD) de suppression de sous-répertoire sur le répertoire dans lequel est le répertoire qu'il veut supprimer. Si l'utilisateur veut modifier une liste de contrôle d'accès (ACL), il doit posséder une permission (P) de modification de répertoires et de fichiers. Si l'utilisateur veut lancer une exécutable, il doit posséder la permission (X) sur cette exécutable.

D'autre part, le procédé de télédistribution de logiciels pour ordinateur personnel comporte une étape (étape, figure 2) pendant laquelle l'agent exécutable (sdclient) se charge de l'établissement des droits temporaires (DT) des programmes d'installation avant le démarrage de l'installation. Pour établir ces droits temporaires, soit l'agent exécutable (sdclient) interprète les droits temporaires (DT) directement sur les serveurs de dépôt (SDD), soit il transfère et installe les droits temporaires sur la station cible sécurisée. Si les fichiers de droits temporaires (DT) établis sur le serveur de dépôt (SDD) ne sont pas lisibles par le module de sécurisation (MS) utilisé sur la station cible sécurisée (SCS), l'agent exécutable (sdclient) les traduit en droits adaptés à ce dernier module. Pour cela, l'agent exécutable (sdclient) utilise les informations concernant le module de sécurisation (MS) de la station cible sécurisée (SCS) qu'il a obtenues lors de l'étape (C). Par conséquent, soit l'agent exécutable (sdclient.exe) transfère les fichiers de droits temporaires du serveur de dépôt à la station cible sécurisée (SCS) et les installe, soit il interprète directement les fichiers de droits temporaires (DT) en les laissant sur les serveurs de dépôt (SD). Ces droits donnent des permissions de type permission de lancement du programme d'installation du programme applicatif (PAT) et aussi de tout autre programme auxiliaire nécessaire à la phase d'installation. L'agent exécutable (sdclient) peut ainsi activer les programmes d'installation du produit à installer (étape G, figure 2).

De plus, le procédé de télédistribution de logiciels pour ordinateur personnel comporte une étape (étape H, figure 2) pendant laquelle l'agent (sdclient) se charge de la suppression des droits temporaires (DT) des programmes d'installation. En effet, ces droits temporaires (DT) doivent être supprimés dans la station cible après la phase d'installation afin qu'un utilisateur ne puisse plus modifier des paramètres de l'installation. L'agent exécutable (sdclient) doit donc bénéficier, dans le cadre d'une sécurisation de type "CP8-File", d'un droit qui permet la modification de la liste de contrôle d'accès (ACL) du fichier et d'un droit de suppression de fichiers en ayant les permissions de suppression (L) (deLete) sur le fichier et la permission RF (Remove File) de suppression de fichier dans le répertoire. (Figure 5)

Enfin, le procédé de télédistribution de logiciels pour ordinateur personnel comporte une étape (étape I,figure 2) pendant laquelle l'agent exécutable (sdclient) établit les droits permanents (DP) des fichiers installés. L'agent exécutable (sdclient) recherche la liste des droits permanents (DP) sur le serveur de dépôt (SDD) (étape I, figure 2). Puis, l'agent exécutable (sdclient) soit transfère les fichiers de droits permanents (DP) du serveur de dépôt (SDD) à la station cible sécurisée (SCS) et les installe, soit interprète directement les fichiers de droits permanents (DT) en les laissant sur les serveurs de dépôt (SD). Dans ce dernier cas, lorsque la liste de droits permanents (DP) n'est pas lisible par le module de sécurisation (MS) de la station cible, celle-ci est traduite en droits adaptés et lisibles par le module de sécurisation (MS). Pour ce faire, l'agent exécutable (sdclient) doit disposer de droits (W) d'écriture dans le fichier (ACL) pour installer les droits permanents (DT) en cas de première installation ou les modifier. Les droits permanents (DT) concernant les ressources du produit installées seront gérés par le module de sécurisation (MS) sur ladite station cible. Enfin, la consigne (CONS) est effacée pour éviter de redéclencher une nouvelle phase d'installation (étape K, figure 2).

Selon un autre mode de réalisation de l'invention, pour permettre l'installation des fichiers de droits temporaires (DT), l'utilisateur doit posséder les permissions de créer et de supprimer des fichiers et des répertoires, c'està-dire les permissions (L) et (RF). Pour installer un produit (PAT), l'utilisateur doit posséder la permission (X). Afin de supprimer des fichiers de droits temporaires, l'utilisateur doit posséder les permissions (L) et (RF). Et enfin, l'utilisateur doit posséder les permissions (MF) et (MD) pour pouvoir établir les fichiers de droits permanents (DP) qui seront gérés ensuite par le module de sécurisation (MS) de la station cible sécurisée (SCS).

D'autres modifications à la portée de l'homme de métier font également partie de l'esprit de l'invention.

## Revendications

1. Procédé de télédistribution de logiciels pour ordinateur personnel (SDPC) sur des stations cibles sécurisables, comportant au moins une station cible, des serveurs auxiliaires de dépôt (SDD) et de consigne (SDC) et une console d'administration (CDA) exécutant un programme d'administration appelé ISM, l'installation des logiciels sur les stations étant activée par un programme d'installation sécurisable appelé sdclient caractérisé en ce que le programme d'installation sécurisable (sdclient) teste si la station cible est sécurisée et par quel type de module de sécurisation (MS) elle est sécurisée; si la station cible n'est pas sécurisée, le programme d'installation sécurisable (sdclient) enclenche l'implémentation d'un programme non sécurisé; si la station cible est sécurisée, le programme d'installation (sdclient) recherche une liste de droits temporaires (DT) et une liste de droits permanents (DP) établies sur le serveur de dépôt (SDD) pour installer un fichier temporaire de droits permettant l'installation de l'application et établir un fichier de droits permanents.

2. Procédé de télédistribution de logiciels pour ordinateur personnel (SDPC) sur des stations cibles sécurisables selon la revendication 1, caractérisé en ce que le procédé comporte l'exécution des étapes suivantes afin d'installer un fichier temporaire de droits permettant l'installation de l'application, puis d'établir un fichier de droits permanents :
- une étape (D) pendant laquelle le programme d'installation sécurisable (sdclient) lit les consignes (CONS) qui le concernent sur ledit serveur de consignes (SDC),
- une étape (E) pendant laquelle le programme d'installation sécurisable (sdclient) accède à une liste de droits (DT) située sur un serveur de dépôt (SDD) dont l'adresse est spécifiée dans les consignes (CONS) dudit serveur de consignes (SDC),
- une étape (F) pendant laquelle le programme d'installation sécurisable (sdclient) établit lesdits droits temporaires (DT) sur la station cible sécurisée (SCS),
- une étape (G) pendant laquelle le programme d'installation (sdclient) active au moins un programme d'installation du produit à installer (install.exe, setup.exe),
- une étape (H) pendant laquelle le programme d'installation sécurisable (sdclient.exe) supprime les fichiers des droits temporaires (DT).
- une étape (I) pendant laquelle le programme d'installation sécurisable (sdclient.exe) établit les droits permanents (DP) sur la station cible sécurisée (SCS) de manière à ce que le module de sécurisation (MS) de ladite station cible sécurisée (SCS) puissent les gérer.

3. Procédé de télédistribution de logiciels pour ordinateur personnel (SDPC) sur des stations cibles sécurisables selon la revendication 2, caractérisé en ce que pour établir les droits temporaires (DT) sur la station cible sécurisée (SCS), le programme d'installation sécurisable (sdclient) interprète directement les droits temporaires (DT) sur les serveurs de dépôt (SDD).

4. Procédé de télédistribution de logiciels pour ordinateur personnel (SDPC) sur des stations cibles sécurisables selon la revendication 2, caractérisé en ce que pour établir les droits temporaires (DT) sur la station cible sécurisée (SCS), le programme d'installation sécurisable (sdclient) transfère lesdits fichiers de droits temporaires (DT) dudit serveur de dépôt (SDD) à ladite station cible sécurisée (SCS) et les installe sur la station cible sécurisée (SCS).

5. Procédé de télédistribution de logiciels pour ordinateur personnel (SDPC) sur des stations cibles sécurisables selon la revendication 4, caractérisé en ce que le programme d'installation sécurisable (sdclient) traduit les fichiers de droits temporaires (DT) installés sur le serveur de dépôt (SDD) de manière à les rendre lisibles par le module de sécurisation (MS) utilisé sur la station cible sécurisée (SCS),

6. Procédé de télédistribution de logiciels pour ordinateur personnel (SDPC) sur des stations cibles sécurisables selon la revendication 2, caractérisé en ce lesdits droits permanents (DP) sont établis sur la station cible sécurisée (SCS) par l'exécution des étapes suivantes:
- une étape pendant laquelle ledit programme d'installation sécurisable (sdclient.exe) recherche ledit fichier des droits permanents (DP) sur ledit serveur de dépôt (SDD) et le transforme en fichiers de droits adaptés et lisibles par le module de sécurisation (MS) utilisé sur ladite station cible sécurisée (SCS),
- une étape pendant laquelle ledit programme d'installation sécurisable (sdclient.exe) installe les fichiers des droits permanents (DP) sur ladite station cible sécurisée (SCS) de manière à ce que le module de sécurisation de ladite station cible sécurisée (SCS) puisse gérer lesdits fichiers de droits permanents (DP),

7. Procédé de télédistribution de logiciels pour ordinateur personnel (SDPC) sur des stations cibles sécurisables selon la revendication 2, caractérisé en ce que l'étape d'installation des fichiers est suivie d'une étape de suppression des consignes (CONS) dans ledit serveur de consignes (SDC).

8. Procédé de télédistribution de logiciels pour ordinateur personnel (SDPC) sur des stations cibles sécurisables selon la revendication 1, caractérisé en ce que l'étape (C) de recherche du type de sécurisation est réalisée soit par la recherche d'un nom construit d'une façon déterminée par avance, soit par l'introduction d'une référence aux fichiers des droits dans le serveur de consigne (SDC).

9. Procédé de télédistribution de logiciels pour ordinateur personnel (SDPC) sur des stations cibles sécurisables selon la revendication 1, caractérisé en ce que ladite liste de droits (LD) est cryptée et non modifiable.

10. Procédé de télédistribution de logiciels pour ordinateur personnel (SDPC) sur des stations cibles sécurisables selon la revendication 1, caractérisé en ce que les consignes (CONS) sont cryptées sur le serveur de consignes (SDC) afin d'empêcher l'accès aux listes de droits (LD).

11. Dispositif de télédistribution de logiciels pour ordinateur personnel (SDPC) sur des stations sécurisables, comportant au moins une station cible, des serveurs auxiliaires de dépôt (SDD) et de consigne (SDC) et une console d'administration (CDA) exécutant un programme d'administration appelé ISM, l'installation des logiciels sur les stations étant activée par un programme d'installation sécurisable appelé sdclient caractérisé, en ce que une liste des droits temporaires (DT) des programmes d'installation et une liste des droits permanents (DP) des fichiers installés sont associées aux fichiers du logiciel à installer sur le serveur de dépôt (SDD).

12. Dispositif de télédistribution de logiciels pour ordinateur personnel (SDPC) sur une station sécurisable selon la revendication 9, caractérisé en ce que ledit programme sécurisable (sdclient.exe) exploite les droits temporaires (DT) afin d'installer définitivement et immuablement un produit (PAT) sur une station cible sécurisée (SCS).

13. Dispositif de télédistribution de logiciels pour ordinateur personnel (SDPC) sur une station cible sécurisable (SCS) selon la revendication 9, caractérisé en ce que les droits temporaires (DT) permettant l'installation du produit (PAT) sont supprimés après l'installation dudit produit.

14. Dispositif de télédistribution de logiciels sur une station cible sécurisable selon la revendication 9, caractérisé en ce que les droits temporaires (DT) agissent sur le programme d'installation et tout autre programme auxiliaire pouvant être lancé pendant la phase d'installation.

15. Dispositif de télédistribution de logiciels selon la revendication 9, caractérisé en ce que lesdits droits permanents (DT) établis par le programme d'installation sécurisable (sdclient) sont gérés par le module de sécurisation (MS) installé sur ladite station cible sécurisée (SCS).

16. Dispositif de télédistribution de logiciels selon la revendication 9, caractérisé en ce que le programme d'installation sécurisable (sdclient) reconnaît si la station cible est sécurisée ou ne l'est pas.

17. Dispositif de télédistribution de logiciels selon la revendication 9, caractérisé en ce que le programme d'installation sécurisable (sdclient) reconnaît le type de sécurisation implanté sur la station cible sécurisée (SCS) et que le programme d'installation sécurisable (sdclient) enclenche l'implémentation d'un programme sécurisé adapté au type de sécurisation implanté sur la station cible sécurisée (SCS).
